(19) Europäisches Patentamt
European Patent Office
Office européen des brevets

(11) **EP 2 872 781 B1**

(12) **EUROPÄISCHE PATENTSCHRIFT**

(45) Veröffentlichungstag und Bekanntmachung des Hinweises auf die Patenterteilung:
**13.12.2017 Patentblatt 2017/50**

(51) Int Cl.:
*F04D 15/00* ^(2006.01)      *G01F 1/66* ^(2006.01)

(21) Anmeldenummer: **13745791.7**

(86) Internationale Anmeldenummer:
**PCT/EP2013/002052**

(22) Anmeldetag: **11.07.2013**

(87) Internationale Veröffentlichungsnummer:
**WO 2014/009016 (16.01.2014 Gazette 2014/03)**

(54) **KREISELPUMPE MIT ULTRASCHALL-DURCHFLUSSMESSER**

CENTRIFUGAL PUMP WITH ULTRASONIC FLOW METER

POMPE CENTRIFUGE AVEC DÉBITMÈTRE À ULTRASONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.07.2012 DE 102012013774**

(43) Veröffentlichungstag der Anmeldung:
**20.05.2015 Patentblatt 2015/21**

(73) Patentinhaber: **WILO SE**
**44263 Dortmund (DE)**

(72) Erfinder: **BUDZYNSKI, Edgar**
**44229 Dortmund (DE)**

(74) Vertreter: **Cohausz Hannig Borkowski Wißgott Patent- und Rechtsanwaltskanzlei Schumannstrasse 97-99 40237 Düsseldorf (DE)**

(56) Entgegenhaltungen:
**EP-A1- 0 303 255      EP-A1- 2 053 366
EP-A2- 1 174 689      DE-A1-102004 060 065
JP-A- 2001 349 758    JP-A- 2009 276 226
US-A1- 2007 122 290**

## Beschreibung

Die Erfindung betrifft eine Kreiselpumpe zur Förderung einer Flüssigkeit, mit einem in einer Pumpenkammer angeordneten Laufrad und jeweils einem an der Pumpenkammer angeschlossenen Saugstutzen und Druckstutzen.

Zur Bestimmung des Arbeitspunktes einer Pumpe wird statt des Volumenstroms bevorzugt der Istwert des absoluten Drucks auf der Druckseite oder der Differenzdruck zwischen Druck- und Saugseite der Pumpe (als Äquivalent für die Förderhöhe) verwendet. Das Differenzdruckverfahren ist aufgrund der Kosten in der Regel nur in Pumpen höherer Leistung bzw. Preislage zu finden.

Alternativ kommen separate "stand alone" Volumenstromsensoren in Anlagen wie Heizungs-, Trinkwasser-, Frischwasser-, Solaranlagen, etc. zur Anwendung, die den Volumenstrom nach verschiedensten Sensorprinzipien, beispielsweise mittels MID (Magentisch-Induktiver Durchflussmesser), Vortex-Sensoren, oder Verdrängerprinzipien wie Laufrad, Turbine, Paddel, Schwebekörper, etc. direkt messen. Separat als sogenannter Inline-Sensor, der zwischen zwei Rohrenden angeordnet ist, oder sogenannter Clamp-on-Sensor, der außen auf ein Rohr geklemmt ist und durch die Rohrwandung misst, wie dies beispielsweise für den Fall einer Pumpe in der DE 10 2012 210 518 A1 beschrieben ist, sind auch Ultraschallsensoren erhältlich. Diese Sensoren nach dem Stand der Technik benötigen viel Bauraum in einer Pumpenanlage und sind zudem relativ teuer. Allen hier genannten Sensoren ist zudem zu eigen, dass sie ein eigenes Gehäuse für die eigentlichen Sensorelemente, die Elektronik, die Schnittstellen und die Stromversorgung, zum Teil auch für die Messstrecke benötigen.

Ein weiteres bekanntes Verfahren zur Bestimmung des Durchflusses zur Regelung des Arbeitspunktes einer Pumpe ist die sogenannte Beobachterregelung, ein Verfahren, welches über die elektrischen Größen (Leistungsaufnahme) des Pumpenmotors im Betrieb auf den Durchfluss und damit den Arbeitspunkt berechnet. Im Allgemeinen ist mit diesem Verfahren nicht der gesamte Volumenstrombereich bzw. Arbeitsbereich abgedeckt und es kann zudem bei gekrümmter Leistungskennlinie der Pumpe zu mehrdeutigen Ergebnissen führen.

Bisherige Versuche, einen Durchfluss-Sensor in eine Pumpe zu integrieren, scheiterten entweder an der Verwendung des falschen/ungeeigneten/ unzureichenden Sensors bzw. Sensorprinzips, an der nicht vorhandenen Strömungsoptimierung, oder an den technischen Eigenschaften bzw. der Eignung des Sensors in einer solchen Einbausituation, welche sich in der Regel für den Sensor durch ungünstige Strömungsverhältnisse auszeichnet. Problematisch für einen Sensor in der Pumpe sind beispielsweise

- Strömungsrückwirkungen durch das Laufrad der Pumpe an der Saugseite,
- Druckpulse durch das Laufrad auf den Sensor auf der Druckseite,
- Turbulenzen durch die geometrische Gestaltung von Saug- oder Druckstutzen,
- zu kleine Messstrecken,
- zu kleine Beruhigungsstrecken, etc.

Diesbezüglich weisen z. B. Vortex-Sensoren eine besondere Empfindlichkeit gegenüber Strömungseinflüssen auf, die nur durch eine besondere Strömungskonditionierung vor und/ oder hinter dem Sensor in ihrer Wirkung minimiert werden können. Das Vortex-Sensorprinzip ist zudem erst ab Strömungsgeschwindigkeiten von 0,3 m/sec. in der Lage, den Volumenstrom korrekt zu erfassen. Für eine sogenannte Nullmengendetektion, d.h. einen relativ geringen Volumenstrom, ist der Vortex-Sensor daher weniger geeignet.

Ein Magentisch-induktiver Durchflusssensor erzeugt aufgrund der durch ihn verengten Messstrecke erhöhte Druckverluste und benötigt für brauchbare Messungen ebenfalls eine Strömungsberuhigung in besonderem Maße, was wiederum einen erhöhten konstruktiven Aufwand durch Strömungskonditionierungselemente als auch mehr Bedarf an Bauraum bedeuten kann.

Es ist somit ein technisches Problem, den Volumenstrom, d.h. den Durchfluss einer Pumpe ohne eine zusätzliche, separate außen angebrachte bzw. mit der Pumpe oder einer an ihr angebrachten Komponente verbundene Sensorik zu erfassen.

Ein weiteres Problem ist das geringe erreichbare Verhältnis zwischen maximalem und minimalem Volumenstrom, d.h. das Qmax/Qmin-Verhältnis der meist angebotenen und verwendeten Sensoren. Dieses Verhältnis, auch Turn Down Ratio,Rangeability oder Messbereichsumfang genannt, beschreibt die Dynamik bzw. die Leistungsfähigkeit eines Sensors, bezogen auf den zu erfassenden Volumenstrombereich (Flow Rate). Die am Markt existierenden Sensoren bzw. die im Zusammenhang mit Pumpen eingesetzten Sensoren sind üblicherweise Sensoren, die nach dem magentisch-induktiven Messprinzip, nach dem Vortex-Prinzip oder auch nach dem Verdrängerprinzip (Laufrad, Turbine, Paddel, Schwebekörper, ...) arbeiten. Im Allgemeinen weisen diese Sensoren günstigstenfalls ein Qmax/Qmin-Verhältnis von nur ca. 20 :1 bei der Volumenstromerfassung auf, welches sich in der Praxis schnell als unzureichend erweisen kann.

Der Arbeitsbereich von Pumpen kann hingegen Strömungsgeschwindigkeiten von 0,02 m/sec. bis 10 m/s, d.h. 500 :1 umfassen. Dieser Bereich kann nicht mit einem einzigen Sensor einer der genannten Bauart komplett abgedeckt werden. Die bekannten Sensoren sind verschmutzungsempfindlich, da üblicherweise und bei Vortex-Sensoren und Flügelrädern funktionsbedingt Teile des Sensors in die Strömung hineinragen, dort beweglich gelagert sind, insbesondere bei Flügelrad, Turbine, Paddel, Schwebekörper, etc., und somit Schmutzanlagerungen ausgesetzt sind, welche den Anlaufwert des Sensors verschieben können, was wiederum zu einer Verschiebung der unteren Messbereichsgrenze zu höheren Werten führen kann.

Darüber hinaus können bei Turbinen oder Flügelrädern auch Laufgeräusche durch die Verschmutzung am Lager entstehen. Ferner lagert der Messkanal bei MiD's Feinstpartikel des Mediums ab, wodurch sowohl die Messstrecke verjüngt (Querschnittsänderung) als auch ein falscher Leitwert des Mediums suggeriert wird. Sämtliche Auswertungen können dann über die Zeit zu nennenswerten Messwertverfälschungen führen.

Sensoren nach dem o. g. Prinzip im Strömungsweg einer Pumpe weisen zudem einen die Förderhöhe der Pumpe minimierenden Druckverlust auf, da Komponenten des Sensors in der Durchströmungsstrecke liegen bzw. diese verengen oder gar ausfüllen, wodurch die Effizienz und der Wirkungsgrad der Pumpe verschlechtert wird. Auch benötigen MID-Sensoren und Sensoren nach dem Vortex-Messprinzip aufgrund ihrer Arbeitsweise Beruhigungsstrecken im Ein- und Auslaufbereich des Sensors und können daher zur Einhaltung ihrer Spezifikation, insbesondere der Messunsicherheit bzw. Messgenauigkeit, eine längere Bauform oder weitere Maßnahmen zur Strömungskonditionierung erfordern. Sind die erforderlichen Baugrößen konstruktionsbedingt in der Pumpe oder Anlage nicht realisierbar, und werden diese Sensoren mit verkürzten Messstrecken eingebaut, reagieren sie mit verschlechterter Messgenauigkeit und führen unter Umständen zu einem verringert nutzbaren Volumenstrombereich.

Eine Analyse des Mediums beispielsweise hinsichtlich der Medienart, Medienzusammensetzung oder Medienqualität, und die Diagnose der Pumpe oder der Pumpenanlage erfordert eine passende Sensorik, die sich bis heute aus mehreren Sensoren/Komponenten zusammensetzt und die bis heute, abgesehen von der bekannten Temperatur- und/oder Drucksensorik, nicht in der Pumpe integriert sind.

Eine Aufgabe der Erfindung ist es, ein Kreiselpumpenaggregat mit einer Sensorik bereitzustellen, die den Volumenstrom mit hinreichender Genauigkeit möglichst über den gesamten Volumenstrombereich bzw. Arbeitsbereich der Pumpe oder eines diese umfassenden Pumpensystems ermitteln kann, wobei das hierfür notwendige Qmax/Qmin-Verhältnis deutlich über dem o. g. üblichen Qmax/Qmin-Verhältnis von 20:1 liegen soll.

Diese Aufgabe wird erfindungsgemäß durch ein Kreiselpumpenaggregat mit den Merkmalen des Anspruchs 1 gelöst. Vorteilhafte Weiterbildungen der Erfindung sind in den Unteransprüchen aufgeführt.

Erfindungsgemäß wird eine Kreiselpumpe zur Förderung einer Flüssigkeit, mit einem in einer Pumpenkammer angeordneten Laufrad und jeweils einem an der Pumpenkammer angeschlossenen Saugstutzen und Druckstutzen vorgeschlagen, die eine ultraschallbasierte Durchfluss-Messeinrichtung aufweist, umfassend wenigstens zwei Ultraschalleinheiten zur Aussendung und/ oder Detektion von Ultraschallimpulsen, die innenseitig im oder am Saugstutzen, Druckstutzen und/ oder der Pumpenkammer angeordnet sind, wobei zwischen den Ultraschalleinheiten mindestens eine Messstrecke gebildet ist, entlang welcher wenigstens ein erster, von einer der Ultraschalleinheiten stromaufwärts aussendbarer Ultraschallimpuls von einer anderen der Ultraschalleinheiten detektierbar ist, und wenigstens ein zweiter, von einer der Ultraschalleinheiten stromabwärts aussendbarer Ultraschallimpuls von einer anderen der Ultraschalleinheiten detektierbar ist, wobei die Durchfluss-Messeinrichtung eine Sensorelektronik zur Ermittlung einer Laufzeitdifferenz zwischen dem ersten und dem zweiten Ultraschallimpuls und zur Bestimmung eines Durchflusses der Kreiselpumpe aus der Laufzeitdifferenz aufweist.

Anders als im Stand der Technik, gemäß welchem Ultraschall-Sensoren zur Durchflussmessung außen an das Pumpengehäuse montiert werden, und die Messung durch eine Gehäusewand erfolgt, sogenannte Clamp-on Technik, ist erfindungsgemäß vorgesehen, Ultraschalleinheiten innenseitig im oder am Saugstutzen, Druckstutzen und/ oder der Pumpenkammer anzuordnen. Dies bedeutet, dass von außen betrachtet, der Sensor hinter oder in einer Wand liegt und nicht durch die Wand hindurch misst. Hierdurch kann der Volumenstrom ohne externe, d.h. außen an der Pumpe angebrachte Sensoren erfasst werden, so dass es nicht zu einer Baugrößen- oder Baulängenänderung, insbesondere hinsichtlich des Abstandes der Montageflansche der Pumpe kommt. Insoweit ist aufgrund Baugrößengleichheit auch eine Austauschbarkeit gegen herkömmliche Pumpen ohne Durchflusssensor gegeben.

Bei der vorgeschlagenen Kreiselpumpe wird eine ultraschallbasierte Sensorik verwendet, die zumindest zwei Ultraschalleinheiten, d.h. Ultraschallsensoren, verwendet. Eine Ultraschalleinheit, nachfolgend auch US-Einheit genannt, kann entweder eine reine Ultraschall-Sendeeinheit oder eine reine Ultraschall-Empfangseinheit oder eine kombinierte Ultraschall- Sende-/Empfangseinheit sein.

Die US-Einheiten sind derart zueinander ausgerichtet, dass eine US-Einheit in Strömungsrichtung, die andere entgegen der Strömungsrichtung Ultraschallimpulse aussendet bzw. aussenden kann. Das erfindungsgemäße Verfahren benutzt somit keinen passiv gemessenen Körperschall oder Luftschall, sondern aktiv erzeugten Flüssigkeitsschall. Jeweils eine andere US-Einheit empfängt dann den ausgesendeten Impuls. Zwei eine Messstrecke ausbildende US-Einheiten sind somit in Strömungsrichtung zueinander versetzt.

Zusätzlich zu der ohnehin vorhanden Ausbreitungsgeschwindigkeit des Ultraschalls in der geförderten Flüssigkeit prägt die Strömung den Impulsen einen Geschwindigkeitsvektor auf, so dass die in Strömungsrichtung gerichteten Impulse beschleunigt und die entgegen der Strömungsrichtung gerichteten Impulse gebremst werden. Es kommt somit zwischen diesen Impulsen selbst bei gleicher Lauflänge, d.h. bei bevorzugter gleicher Länge der Messstrecke, zu unterschiedlichen Laufzeiten, zu deren Bestimmung die Durchfluss-Messeinrichtung eingerichtet ist.

Das erfindungsgemäße Ultraschall-Messprinzip mit Laufzeitdifferenzverfahren ermöglicht es, den Volumenstrom der Kreiselpumpe mit besonders hoher Genauigkeit über nahezu den gesamten Volumenstrombereich bzw. Arbeitsbereich der Pumpe zu ermitteln, so dass ein maximales Qmax/Qmin-Verhältnis erreicht werden kann.

In einer Ausführungsvariante können die Ultraschalleinheiten kombinierte Sende-Empfangseinheiten sein, wobei der wenigstens eine erste Ultraschallimpuls von einer ersten Sende-Empfangseinheit aussendbar und von einer zweiten Sende-Empfangseinheit detektierbar ist und der wenigstens eine zweite Ultraschallimpuls von der zweiten Sende-Empfangseinheit aussendbar und von der ersten Sende-Empfangseinheit detektierbar ist. Diese Ausführungsvariante kommt grundsätzlich mit zwei Sende-Empfangseinheiten aus, wenngleich es von Vorteil ist, weitere solcher US-Einheiten zu verwenden.

Gemäß einer vorteilhaften Weiterbildung kann die Durchfluss-Messeinrichtung eine dritte und eine vierte Sende-Empfangseinheit zur Aussendung und Detektion von Ultraschallimpulsen umfassen, wobei zwischen der dritten und vierten Sende-Empfangseinheit eine zweite Messstrecke gebildet ist, entlang welcher wenigstens ein erster, von der dritten Sende-Empfangseinheit stromaufwärts aussendbarer Ultraschallimpuls von der vierten Sende-Empfangseinheit detektierbar ist und wenigstens ein zweiter, von der vierten Sende-Empfangseinheit stromabwärts aussendbarer Ultraschallimpuls von der dritten Sende-Empfangseinheit detektierbar ist. Bei dieser Ausführungsvariante ist es beispielsweise möglich, an zwei verschiedenen Stellen innerhalb der Pumpe zu messen und die jeweiligen Messwerte zu mitteln. Die Genauigkeit der Messung wird hierdurch erhöht.

Gemäß einer weiteren Ausführungsvariante weist die Durchfluss-Messeinrichtung zwei weitere Ultraschalleinheiten zur Aussendung und/ oder Detektion von Ultraschallimpulsen auf, wobei zwischen den zwei weiteren Ultraschalleinheiten eine zweite Messstrecke gebildet ist. Insgesamt umfasst die Durchfluss-Messeinrichtung dann vier US-Einheiten, die zwei Messstrecken definieren. Wenigstens ein erster, von einer ersten Ultraschalleinheit entlang der ersten Messstrecke stromaufwärts aussendbarer Ultraschallimpuls ist von einer zweiten Ultraschalleinheit detektierbar und wenigstens ein zweiter, von einer dritten Ultraschalleinheit entlang der zweiten Messstrecke stromabwärts aussendbarer Ultraschallimpuls ist von einer vierten Ultraschalleinheit detektierbar.

Gemäß dieser weiteren Ausführungsvariante genügt es, dass die US-Einheiten nur entweder Ultraschallsender oder Ultraschallempfänger sind. So können die erste und die dritte Ultraschalleinheit reine Sender, die zweite und die vierte Ultraschalleinheit reine Empfänger sein. Es sei jedoch angemerkt, dass dies nicht zwingend erforderlich ist. Vielmehr ist es auch möglich, dass zumindest eine oder auch alle US-Einheiten baulich identisch sind, d.h. Sende-Empfangseinheiten sind, und lediglich durch ihre elektrische Beschaltung bzw. Ansteuerung durch die Sensorelektronik entweder nur als Empfänger oder nur als Sender verwendet werden.

Vorzugsweise können sich die erste und die zweite Messtsrecke kreuzen. Dies ermöglicht es, zirkulare Strömungen, bzw. Strömungen mit einem zirkularen Strömungsvektor zu identifizieren und dies bei der Durchflussberechnung zu berücksichtigen, insbesondere zu eliminieren. Eine starke zirkulare Strömung ist zumindest im Saugstutzen aufgrund der Rückwirkung des Laufrades in diesen hinein vorhanden und kann die Messgenauigkeit beeinträchtigen.

Es ist von Vorteil, wenn die erste und die zweite Ultraschalleinheit in eine Wand des Saugstutzens, des Druckstutzens und/ oder der Pumpenkammer integriert sind. So können zwei US-Einheiten entweder in derselben Wand des Saugstutzens oder in der Wand des Druckstutzens oder in der Wand der Pumpenkammer integriert sein. Ferner ist es auch möglich, dass sich eine US-Einheit in einer der genannten Wände und die andere US-Einheit in einer anderen der genannten Wände befindet. Die US-Einheiten sind damit von der jeweiligen Wand umgeben und Bestandteil der Wand. Dies hat den Vorteil, dass sie nicht oder zumindest nicht weit in den Strömungsweg der Kreiselpumpe, d.h. in den Kanal des Saug- oder Druckstutzens bzw. nicht oder zumindest nicht weit in die Pumpenkammer hineinragen und damit diesen Strömungsweg nur minimal beeinflussen. Dies verringert den Strömungswiderstand, minimiert Druckverluste und erhöht folglich den Wirkungsgrad der Kreiselpumpe.

Gemäß einer anderen Ausführungsvariante kann eine der US-Einheiten in einer Wand des Saugstutzens, des Druckstutzens oder der Pumpenkammer integriert sein, wohingegen die andere US-Einheiten im Kanal des Saugstutzens, des Druckstutzens oder im Innenraum der der Pumpenkammer angeordnet ist.

Vorzugsweise liegen die US-Einheiten in taschenförmigen Ausnehmungen in der jeweiligen Wand ein. Ein Einsetzen einer Sende-Empfangseinheit in die jeweilige Ausnehmung kann dann beispielsweise von dem jeweiligen Stutzenkanal aus erfolgen. Im Falle der Pumpenkammer kann das Einsetzen bei abmontiertem Pumpengehäuse erfolgen, da in diesem Fall das Innere der Pumpenkammer frei zugänglich ist.

Durch die taschenförmigen Ausnehmungen sind die Wände nach außen hin zumindest weitestgehend geschlossen. Lediglich ein Anschlusskabel einer US-Einheit kann durch die Wand am Boden der Ausnehmung hindurchgeführt sein. Diese Durchführung kann mit dem Dichtungsmittel beispielsweise einem Harz ausgefüllt sein, so dass keine Gefahr einer Leckage besteht.

Im bzw. um den Bereich der Ausnehmung kann das Gehäuse der Pumpe eine nach außen gerichtete Verdickung aufweisen, so dass die Wanddicke des Pumpengehäuses trotz Ausnehmung noch ausreichend dick ist, um Stabilität des Pumpengehäuses bei den Pumpendrücken zu gewährleisten.

Alternativ zu den taschenförmigen Ausnehmungen können in den Wänden Bohrungen vorgesehen sein, durch die die US-Einheiten von aussen in eine Wand des Pumpengehäuses, d.h. in eine der Stutzenwände oder die Pumpenkammerwand eingesetzt werden können. Die US-Einheiten können hierzu beispielsweise an ihrer Aussenseite ein Gewinde aufweisen, mittels welchem sie in entsprechende Gewindebohrungen in einer Wand der Pumpengehäuses eingeschraubt werden können. Gleichzeitig kann auf dem Gewinde ein Kleb- und/ oder Dichtstoff aufgebracht sein, so dass die US-Einheiten nach dem Einschrauben abgedichtet und fixiert in der Pumpengehäusewand einliegen.

Die Anordnung einer US-Einheit in einem der Saugstutzen oder der Pumpenkammer kann beispielsweise mittels eines Haltemittels erfolgen, von dem die US-Einheit gehalten oder getragen wird. Das Haltemittel kann sich beispielsweise innenseitig des Stutzenkanals oder des Innenraums der Pumpenkammer abstützen oder an der Wand des Stutzens oder der Pumpenkammer befestigt sein.

Besonders vorteilhaft ist es, wenn entlang der Messstrecke mindestens ein Reflektor angeordnet ist. Dies gewährt Flexibilität bei der Anordnung der US-Einheiten innerhalb des Stutzen bzw. der Pumpenkammer. Durch die Verwendung eines Reflektors kann der Signallaufweg der Ultraschallimpulse umgelenkt werden, so dass die Sende- Empfangseinheiten idealerweise nicht auf gegenüberliegenden Seiten der Strömung angeordnet werden müssen, sondern auf derselben Seite angeordnet werden können.

Der Reflektor kann durch einen Spiegel gebildet sein, der wie die Sende-Empfangseinheit innenseitig des Saugstutzens, Druckstutzen oder der Pumpenkammer anzuordnen ist, beispielsweise in einer seiner Form entsprechenden Vertiefung, um ebenfalls den Strömungswiderstand nicht zu erhöhen. Es kann jedoch alternativ auch eine reflektierende Beschichtung auf der Innenseite der Wand des Saugstutzens, Druckstutzens oder der Pumpenkammer als Reflektor dienen. Ferner können auch mehrere Reflektoren innerhalb der Messstrecke vorgesehen sein.

Für eine Laufzeitdifferenzmessung genügt es, wenn wenigstens ein Ultraschallimpuls von der entsprechenden Ultraschall- Sendeeinheit ausgesendet wird. Es ist jedoch von Vorteil und zu bevorzugen, wenn die Durchfluss-Messeinrichtung derart eingerichtet ist, dass von der entsprechenden Ultraschalleinheit eine Reihe aufeinanderfolgender Ultraschallimpulse aussendbar ist. Eine solche Reihe wird als Burst bezeichnet und ermöglicht es, von den empfangenen Impulsen einen Mittelwert zu bilden. Dies verbessert die Messgenauigkeit enorm, da aufgrund der stark dynamischen Turbulenzen im Saugstutzen, Druckstutzen und der Pumpenkammer einzelne Impulse stark verzerrt werden oder sogar gänzlich untergehen könnten. Bei der Verwendung einer Reihe aufeinanderfolgender Ultraschallimpulse wird die Chance erhöht, dass zumindest einige der Impulse gut genug empfangen werden. Vorzugsweise sind die Ultraschalleinheiten durch Kapseln gebildet, in denen der sensorisch oder aktorisch aktive Teil, beispielsweise eine piezoelektrische Keramik, vorzugsweise in Form einer Tablette (Pille), umschlossen ist.

Eine US-Kapsel kann direkt in eine der Ausnehmungen in einer der genannten Wände eingesetzt und dort vorzugsweise verklebt sein. Alternativ kann die Kapsel in einem Kapselhalter einliegen. Der Kapselhalter bildet ein zusätzliches äußeres Gehäuse, das die Kapsel umgibt. Diese kann dann mitsamt dem Kapselhalter in eine Ausnehmung oder Bohrung in einer der Wände eingesetzt oder einem der genannten Haltemittel befestigt sein. Beispielsweise weist die Aussenseite eines Kapselhalters ein Gewinde auf, um die Kapsel in eine Bohrung der Wand einzuschrauben.

Die Kapseln sind vorteilhafterweise von einer schalldurchlässigen Membran oder Platte verschlossen, an der der sensorisch oder aktorisch aktive Teil einer Ultraschalleinheit anliegt. Beispielsweise kann der aktive Teil mit der Membran oder Platte verklebt sein. Die Platte kann aus einem metallischen Plättchen oder aus Kunststoff bestehen. Durch das Anliegen des aktiven Teils kann die Membran oder Platte den Ultraschallimpuls abgeben und/ oder einen solchen aufnehmen. Sie kann den Flüssigkeitsschall aufnehmen und an den sensorisch wirksamen Teil der Sende- Empfangseinheit übertragen. Ferner kann die Membran oder Platte selbst zu einer Schwingung angeregt werden und damit zur Abstrahlung eines Ultraschallimpulses in die Flüssigkeit verwendet werden.

Nach einem weiteren vorteilhaften Aspekt der Erfindung kann zumindest ein Teil der Sensorelektronik in einem Gehäuse an einer Außenseite des Saugstutzens oder Druckstutzens untergebracht sein. Da die Sensorik selbst innerhalb der Pumpe untergebracht ist, kann die außen angeordnete Elektronik sehr klein ausgeführt werden. In einer Ausführungsvariante kann die gesamte Sensorelektronik in dem Gehäuse untergebracht sein.

Es ist jedoch auch möglich, dass nur ein Teil der Sensorelektronik in dem Gehäuse und ein anderer Teil ein Teil einer Pumpenelektronik der Kreiselpumpe ist. Diese kann vorzugsweise in einem Klemmenkasten an der Kreiselpumpe untergebracht sein und Komponenten für die sonstige Steuerung der Kreiselpumpe, insbesondere ihres Elektromotors umfassen. So kann beispielsweise ein elektronischer Chip, dem die empfangenen Ultraschallimpulse zugeführt sind und der die Laufzeitdifferenz ermittelt ein erster Teil der Sensorelektronik sein, der in dem Gehäuse an einer Außenseite des Saugstutzens oder Druckstutzens untergebracht ist. Ein zweiter Teil kann ein Mikroprozessor sein, der die weitere Messwertverarbeitung vornehmen kann, beispielsweise eine Linearisierung, Filterung (Mittelwertbildung, Tiefpassfilterung zur Rauschunterdrückung), eine Temperaturkompensation und insbesondere die eigentliche Volumenstromberechnung durchführen kann, und der Teil der Pumpenelektronik ist.

Gemäß einer dritten Ausführungsvariante kann die Sensorelektronik vollständig ein Teil der Pumpenelektronik bilden, d.h. im Klemmenkasten der Kreiselpumpe untergebracht sein. In beiden letztegenannten Varianten kann für die Durchfluss-Messeinrichtung ein eigener Mikroprozessor verwendet werden. Es kann jedoch auch derjenige Mikroprozessor verwendet werden, der ohnehin für die Pumpensteuerung verwendet wird, d.h. bereits Teil der Pumpenelektronik und damit vorhanden ist. Hierdurch kann ein zusätzlicher Mikroprozessor eingespart werden, wodurch die Ausfallsicherheit und die Herstellungskosten der Kreiselpumpe reduziert werden.

Um die Messgenauigkeit zu erhöhen, kann der Kanal innerhalb des Saugstutzens und/ oder Druckstutzens wenigstens ein Leitelement zur Strömungskonditionierung aufweisen, insbesondere wenigstens ein Gitter, eine Lamelle, ein Schwert, eine Rippe und/oder eine Finne. Ein solches Leitelement kann die Strömung derart beeinflussen, dass besonders starke Turbulenzen von einer oder beiden Ultraschalleinheiten einer Messstrecke abgehalten werden. Hierzu ist es von Vorteil, das Leitelement, oder zumindest ein solches Leitelement, unmittelbar neben einer Ultraschalleinheit vorzusehen. Beispielsweise kann ein Gitter, das bevorzugt quer zur Hauptströmungsrichtung anzuordnen ist, dazu beitragen, die Strömung zu laminarisieren, d.g. eine zirkulare Komponente zu reduzieren. Eine Lamelle, ein Schwert, eine Rippe und/ oder eine Finne können sich von der Stutzenwand nach innen in den Stutzenkanal erstrecken und beispielsweise einen strömungsberuhigten Schatten bilden, innerhalb dem eine Sende-Empfangseinheit angeordnet sein kann.

Alternativ oder zusätzlich zu einem Leitelement kann der Kanal innerhalb des Saugstutzens und/ oder Druckstutzens eine Verengung zur Beschleunigung der Strömung aufweist. Dies hat den Vorteil, dass auch geringe Strömungen erfasst werden können.

Weiter alternativ oder zusätzlich kann der Kanal innerhalb des Saugstutzens und/ oder Druckstutzens vor und/oder hinter den Ultraschalleinheiten wenigstens eine Hutze zur Minimierung von Strömungsabrissen und von Schmutzablagerungen aufweisen.

Die Pumpenkammer weist üblicherweise eine Spiralkammer und einen das Laufrad umgebenden Seitenraum auf. Erfindungsgemäß kann vorgesehen sein, dass sich die Messstrecke oder die zweite Messstrecke durch diesen Seitenraum erstreckt. Auf diese Weise ist es möglich, dass auch direkt in der Pumpenkammer gemessen werden kann.

Vorzugsweise kann die erfindungsgemäße Kreiselpumpe eine Heizungspumpe für eine Heizungs- oder Kühlanlage oder für eine Solaranlage oder Frischwasseranlage sein.

Mehrere Ausführungsbeispiele sind in den Zeichnungen schematisch dargestellt und werden im Folgenden näher beschrieben. Es zeigen:

Figur 1      die Außenansicht einer Pumpe mit verschiedenen Ultraschall-Sende-Empfangseinheiten in Saug- und Druckstutzen,

Figur 2      einen Schnitt entlang der Linie A-A aus Figur 1 durch eine Pumpe mit Ultraschall-Sende-Empfangseinheiten in den Stutzenwänden,

Figur 3      einen Schnitt entlang der Linie A-A aus Figur 1 durch eine Pumpe mit Ultraschall-Sende-Empfangseinheiten in inline-Ausrichtung,

Figur 4      einen Schnitt entlang der Linie A-A aus Figur 1 durch eine Pumpe mit Ultraschall-Sende-Empfangseinheiten in den Stutzenkanälen,

Figur 5      einen Schnitt entlang der Linie A-A aus Figur 1 durch eine Pumpe mit Ultraschall-Sende-Empfangseinheiten und einem Reflektor im Saugstutzen,

Figur 6      einen Schnitt entlang der Linie A-A aus Figur 1 durch eine Pumpe mit Ultraschall-Sende-Empfangseinheiten und drei Reflektoren im Saugstutzen,

Figur 7      eine Ausführungsvariante gemäß Figur 5 mit einer Sensorelektronik außen am Saugstutzen,

Figur 8a    einen Schnitt entlang der Linie A-A aus Figur 1 durch eine Pumpe mit Ultraschall-Sende-Empfangseinheiten und mit Temperatursensor,

Figur 8b    Bauformen von Temperatursensoren

Figur 8c    Prinzipdarstellung eines Ultraschallsensors

Figur 9      einen Schnitt durch eine Pumpe mit Ultraschall-Sende-Empfangseinheiten in der Pumpenkammer,

Figur 10      einen Schnitt durch eine Pumpe mit Ultraschall-Sende-Empfangseinheiten in der Pumpenkammer gemäß einer weiteren Ausführungsvariante,

Figur 11:      Schnittzeichnung durch eine Ultraschalleinheit einer ersten Ausführungsvariante

Figur 12:      Schnittzeichnung durch eine Ultraschalleinheit einer zeiten Ausführungsvariante

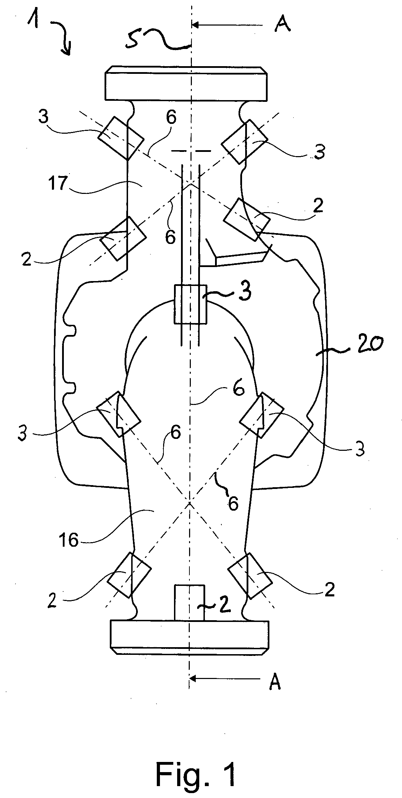

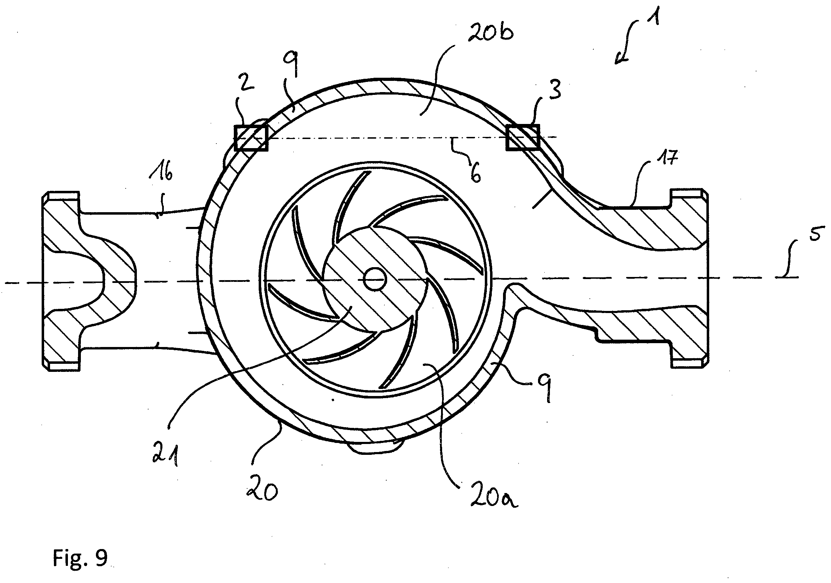

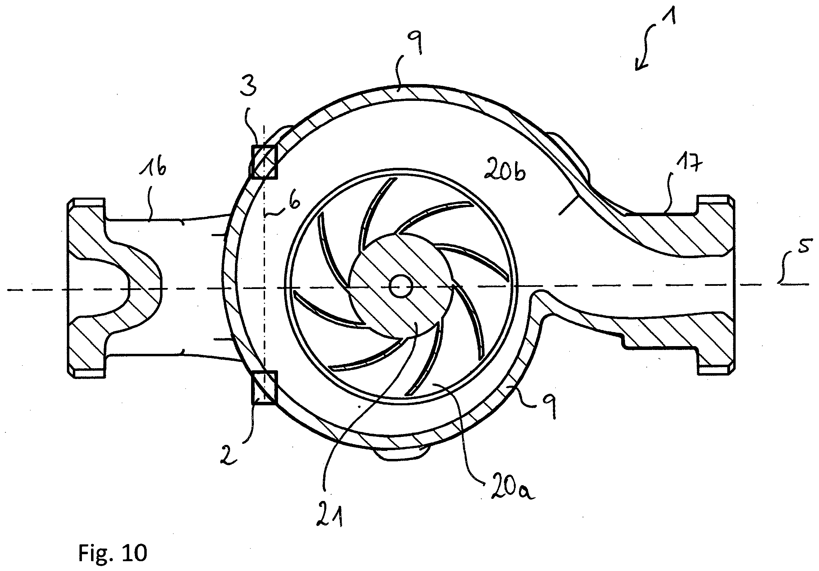

In Figur 1 ist eine beispielhafte Kreiselpumpe 1 zur Förderung einer Flüssigkeit in einer Außenansicht dargestellt, mit einem in einer Pumpenkammer 20 angeordneten Laufrad 21 (siehe Figuren 9 und 10), das in dieser Ansicht allerdings nicht sichtbar ist, und jeweils einem an der Pumpenkammer 20 angeschlossenen Saugstutzen 16 und Druckstutzen 17. Diese liegen zueinander inline, d.h. ihre Mittelachsen liegen in einer Linie. Die Kreiselpumpe 1 umfasst ferner eine ultraschallbasierte Durchfluss-Messeinrichtung 2, 3, 18, die mindestens eine erste und eine zweite Sende-Empfangseinheit 2, 3 zur Aussendung und Detektion von Ultraschallimpulsen aufweist. Es können jedoch auch zwei oder mehr Ultraschalleinheiten innerhalb der Kreiselpumpe 1 realisiert sein. Zwischen zwei Ultraschalleinheiten liegt eine Messstrecke 6.

Figur 1 zeigt fünf verschiedene Anordnungen dieser Ultraschalleinheiten 2, 3, die alternativ oder von denen zwei oder mehr kumulativ vorgesehen sein können. Zwei Ultraschalleinheiten 2, 3 bilden jeweils ein Paar und liegen face-to-face. Sie sind innenseitig des jeweiligen Stutzens 16, 17 angeordnet. Die Sensormessstrecken 6 verlaufen entweder parallel zur Strömung oder in einem Winkel kleiner 90 Grad dazu. Drei alternative Anordnungen sind im Saugstutzen 16, zwei Alternativen im Druckstutzen 17 vorhanden. Im Saugstutzen 16 liegen zwei Messstrecken 6 winklig zur Hauptströmungsrichtung. Eine Messstrecke 6 ist parallel zur Hauptströmungsrichtung und liegt auf der Achse 5. Dabei sei angemerkt, dass Hauptströmungsrichtung von unten nach oben ist, d.h. vom Saugstutzen zum Druckstutzen. Die Sende-Empfangseinheiten 2, 3 sind an einer Außenseite von Saug- oder Druckstutzen 16, 17 der Pumpe 1 angebracht und schauen bzw. messen in den Volumenstrom hinein.

Die Sende-Empfangseinheiten 2, 3 sind nun so angeordnet, dass ein erster, von einer ersten Sende-Empfangseinheit 2 stromaufwärts aussendbarer Ultraschallimpuls von der zweiten Sende-Empfangseinheit 3 detektierbar ist und wenigstens ein zweiter, von der zweiten Sende-Empfangseinheit 3 stromabwärts aussendbarer Ultraschallimpuls von der ersten Sende-Empfangseinheit 2 detektierbar ist. Die Durchfluss-Messeinrichtung 2, 3, 18 ist nun dazu eingerichtet, eine Laufzeitdifferenz zwischen dem ersten und dem zweiten Ultraschallimpuls zu ermitteln und daraus einen Durchfluss der Kreiselpumpe 1 zu bestimmen, wie nachfolgend noch erläutert wird.

In Figur 1 sind alle zweiten Sende-Empfangseinheiten 3 in Strömungsrichtung gegenüber den ersten Sende-Empfangseinheiten 2 versetzt. Sowohl bei den drei im Saugstutzen 16 vorhandenen Sende-Empfangseinheitenpaare 2, 3 als auch bei den beiden im Druckstutzen 17 vorhandenen Sende-Empfangseinheitenpaare 2, 3 kreuzen sich die jeweiligen Messstrecken 6, die zwischen den jeweiligen Paaren 2, 3 vorhanden sind.

Die Sende-Empfangseinheiten 2, 3 sind jeweils von einer Ultraschallkapsel (US-Kapsel) gebildet, die je nach ihrer Ansteuerung sowohl als Ultraschallsender als auch Ultraschallempfänger fungieren kann. Daher wird nachfolgend synonym für die Ultraschalleinheiten 2, 3 der Begriff US-Kapsel 2, 3 verwendet.

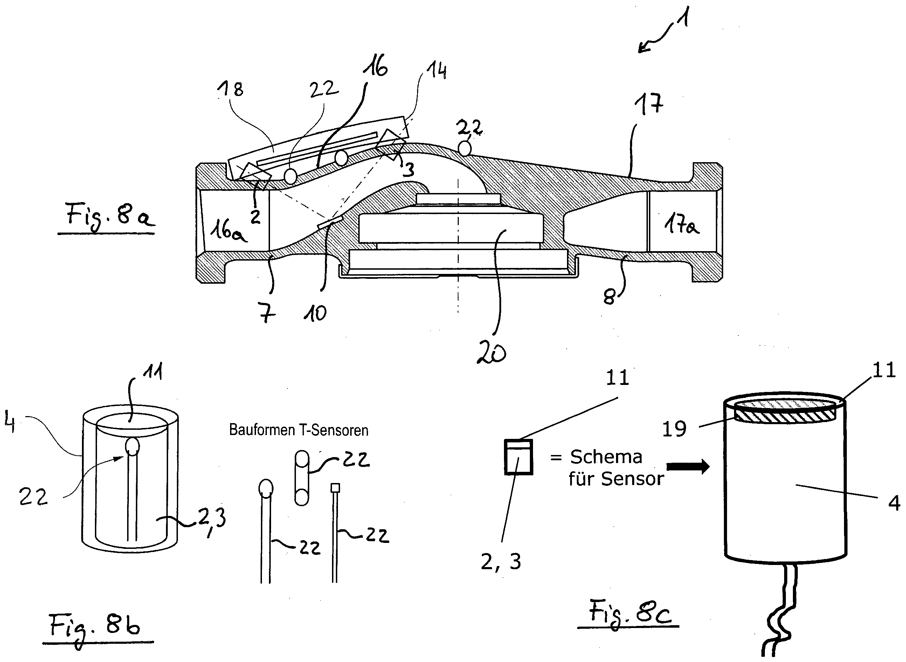

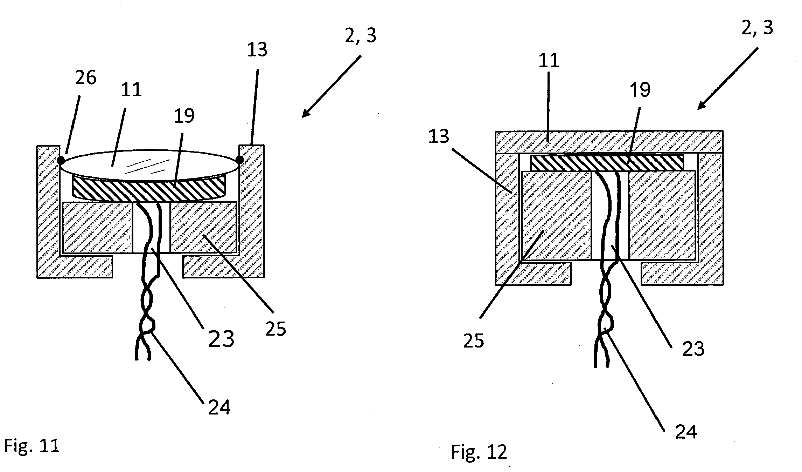

In Figur 8c ist eine schematische Darstellung der Ultraschalleinheiten 2, 3 gegeben, die in den Figuren 11 und 12 durch zwei beispielhafte Ausführungsvarianten einer Ultraschalleinheit 2, 3 konkretisiert ist. Eine Ultraschalleinheit 2, 3, besteht aus einem sensorisch oder aktorisch aktiven Teil 19, hier in Gestalt einer piezoelektrischen Keramik, die von einer Kapsel 13 oder einer Art Tubus umgriffen wird. Die Kapsel 13 besitzt einen äußeren Durchmesser zwischen 6 mm und 9 mm, insbesondere etwa 8 mm. Der aktive Teil 19 ist in Figur 11 mit einer Membran 11, in Figur 12 mit einer Platte 11 gekoppelt, insbesondere verklebt, die die Ultraschallwellen aufnehmen und abstrahlen kann. Das Betriebsverhalten einer US-Kapsel 2, 3 ist damit reziprok. Die Membran 11 oder Platte 11 schützt den aktiven Teil 19 vor der Flüssigkeit. Die Membran 11 kann beispielsweise aus Vanadium bestehen. Sie ist in Figur 11 beidseitig konvex ausgebildet. Die Keramik 19 liegt formschlüssig an der Rückseite der Membran 11 an. Zwischen der Membran 11 und der Kapsel 13 ist auf der der Flüssigkeit zugewandten Seite der Ultraschalleinheit 2, 3 ist ein O-Ring 26 vorhanden, die die Kapsel 13 abdichtet. Rückseitig der piezoelektrischen Keramik 19 ist bei beiden Varianten eine Druckplatte 25 mit einem zentralen Kabelkanal 23 durch den ein Anschlusskabel 24 zur Keramik 19 geführt ist. Für den Einbau in die Pumpe 1 liegen die US-Kapseln 2, 3 jeweils geschützt in einem Kapselhalter 4 ein, siehe Figur 1.

Gemäß einer alternativen, nicht dargestellten Variante können die Membran 11 oder Platte 11 und die Kapsel 13 einstückig aus einem hutförmigen Tiefziehtiel aus Metall gebildet sein, in dem der aktive Teil 19 einliegt und insbesondere vergossen ist.

An der dem Fördermedium zugewandten Seite sind die US-Kapseln 2, 3 und/oder Kapselhalter 4 folglich durch die schalldurchlässige Membran 11 oder Platte verschlossen, um die Sender und/ oder Empfänger vor dem Medium zu schützen. Die Membran 11 oder Platte kann aus Metall oder Kunststoff bestehen.

Die Kapselhalter 4 sind in Ausnehmungen insbesondere Bohrungen oder taschenförmigen Ausnehmungen wie Sacklöchern in der Stutzenwände 7, 8 formschlüssig eingesetzt. Die Außenseite eines Kapselhalters 4 kann ein Gewinde aufweisen, um in eine entsprechende Gewindebohrung eingesetzt werden zu können. Figur 1 zeigt nur eine Prinzipdarstellung der Anordnung der US-Kapseln 2, 3. Sie sind vollständig dargestellt, obwohl in dieser Ansicht an sich nur die außen vom Gehäuse vorstehenden Abschnitte der Kapselhalter 4 sichtbar sind. Hier ist es von Vorteil, wenn das Pumpengehäuse aussen um eine US-Kapsel 2, 3 herum eine Materialmehrmenge, d.h. eine Verdickung aufweist, so dass eine Kapsel 2, 3 vollständig in der entsprechenden Wand einliegt.

Die US-Kapseln 2, 3 können über die hydraulische Öffnung von Saug- oder Druckstutzen 16, 17 als auch seitlich von außen durch die Pumpenwand 7, 8 in die Pumpe 1 bzw. das Pumpengehäuse eingebracht werden.

Jede angeschlossene US-Kapsel 2, 3 kann sowohl als Sender als auch als Empfänger verwendet bzw. angesteuert werden. Eine Messstrecke 6 besteht somit aus zwei US-Kapseln 2, 3. Die Beschickung der US-Kapseln 2, 3 mit einem Sendesignal kann wechselweise erfolgen. D. h. der "erste Schuss" geht beispielsweise in Strömungsrichtung des Mediums, der "zweite Schuss" geht in Gegenrichtung, wobei dies auch in umgekehrter Reihenfolge erfolgen kann.

So ist die eine US-Kapsel 2 zunächst Sender, die andere Empfänger 3. Im zweiten Schuss wird umgeschaltet und die US-Kapseln 2, 3 werden umgekehrt mit einem Signal beschickt. Dies bedeutet, dass dann die jeweils andere US-Kapsel 3 Sender, und die ehemals sendende US-Kapsel 2 dann Empfänger ist. Dadurch ergeben sich zwei Laufzeiten entlang ein und derselben Strecke 6, wobei die Strömung der Flüssigkeit den in Strömungsrichtung ausgesendeten Impuls beschleunigt, den entgegen der Strömungsrichtung ausgesendeten Impuls bremst, so dass ein deutlicher Unterschied in den beiden Laufzeiten besteht. Voneinander subtrahiert ergeben die Strömungslaufzeiten die Laufzeitdifferenz, die für die Berechnung des Durchflusses verwendet werden kann.

Bei bekanntem Querschnitt kann nun der Volumenstrom pro Zeiteinheit ermittelt werden. Sind die Messstrecken 6 nicht parallel bzw. deckungsgleich mit den Strömungsvektoren in Druck- bzw. Saugstutzen 16, 17, was in Figur 1 nur bei den inline zu den Stutzen 16, 17 angeordneten US-Kapseln 2, 3 der Fall ist, sondern liegen in einem Winkel zur Hauptströmungsrichtung, dann ist der Wert der Laufzeitdifferenz noch mit dem Faktor cos alpha zu multiplizieren, wobei alpha der Winkel zwischen Strömungsrichtung der Flüssigkeit und Ultraschallausstrahlrichtung ist.

Alternativ können zwei sich einander gegenüberliegende, kreuzende Messstrecken 6 im Saugstutzen 16 oder im Druckstutzens 17 gegeneinander verrechnet werden. Bei diesem Verfahren werden die US-Kapseln nicht, wie die weiter oben beschriebenen Verfahren, jeweils umgeschaltet zu Sender bzw. Empfänger und dann wieder zu Empfänger bzw. Sender. Vielmehr ist eine US-Kapsel eines Paares ein reiner Sender, die andere ist ein reiner Empfänger. Ein Paar 2, 3 misst auf einer Messstrecke 6 die Laufzeit mit Strömungsrichtung und das andere Paar 2, 3 misst auf der anderen Messstrecke 6 die Laufzeit entgegen der Strömungsrichtung. Allerdings müssen diese Messungen auch abwechselnd erfolgen, damit sich die Signale nicht gegenseitig beeinflussen. Es empfiehlt sich der Einfachheit halber, die Messstrecken 6 gleich lang zu gestalten, so dass die Laufzeiten gleich lang ausfallen, d.h. die Anordnungen symmetrisch gegenüberliegen. Es kann aber auch aufgrund der Verrechenbarkeit (zum Beispiel mittels Offsetwert) der Signale mit unterschiedlich langen Messstrecken 6 gearbeitet werden, sofern dies aus konstruktiven Gründen bei der Anordnung der US-Einheiten innerhalb der Pumpe 1 nicht anders lösbar ist.

Gemäß dieser Ausführung, die in Figur 1 beispielsweise im Saug- oder im Druckstutzen 16, 17 realisiert sein kann, sind die Ultraschalleinheiten 2, 3 an verschiedenen Außenseiten von Saug- oder Druckseite 16, 17 der Pumpe 1 angebracht, in den Volumenstrom schauend/messend, wobei sich die Ultraschalleinheiten 2, 3 "face-to-face" gegenüberliegen, die Messstrecken gewinkelt zur Strömungsrichtung sind und sich kreuzen, so dass Ultraschalleinheiten 2, 3 über Kreuz messen.

Gegenüber Vortex-, IDM- und Verdränger-Sensoren kann eine Durchfluss-Messeinrichtung, die nach dem Ultraschall-Laufzeitprinzip arbeitet, nahezu vollständig in den Strömungsweg, z. B. in den Saugstutzen oder Druckstutzen integriert werden und deshalb keinen zusätzlichen Bauraum erfordern, der die Abmaße der Pumpe wesentlich verändert. Gegenüber bisherigen Lösungen (Induktiv-magnetisch, Vortex, Laufrad oder Turbine) ist es mit dieser Sensoranordnung prinzipiell noch einfacher möglich, einen Durchflusssensor in eine Pumpe zu integrieren, ohne den Strömungsweg des Mediums durch die Pumpe wesentlich zu beeinträchtigen.

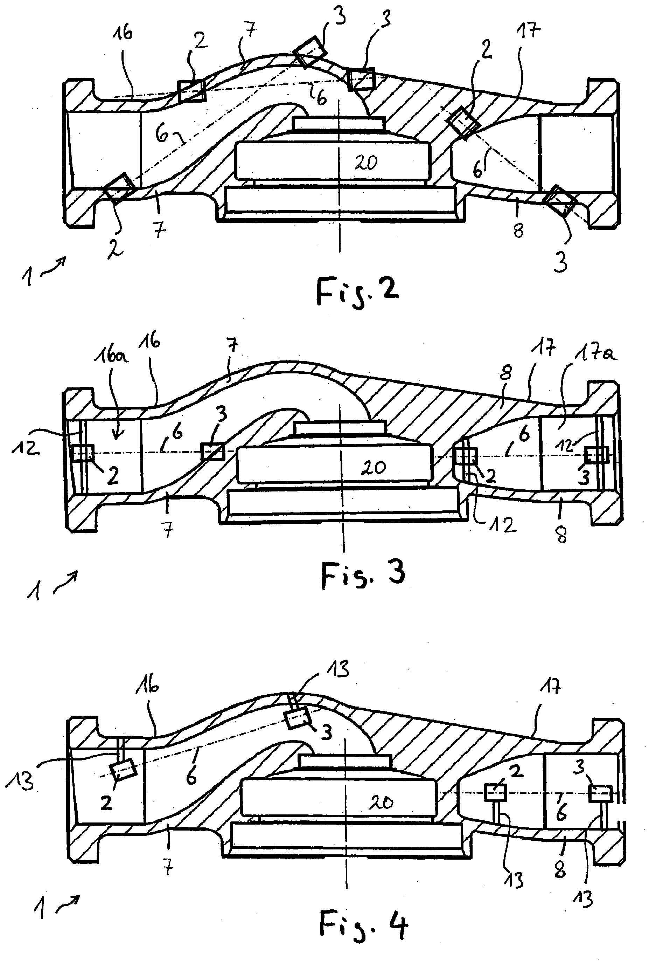

Die Figuren 2 bis 10 zeigen weitere Beispiele für die Anordnung der Ultraschalleinheiten 2, 3 innerhalb der Pumpe. In den Figuren sind jeweils meist mehrere Alternativen gleichzeitig dargestellt, von denen nur jeweils eine Anordnung tatsächlich realisiert sein braucht. Die US-Einheiten 2, 3 sind in Figur 2 in die Wände 7, 8 der Stutzen 16, 17 eingesetzt. In Figur 3 sind sie innerhalb der Stutzen 16, 17 im Wesentlichen koaxial angeordnet, wobei nur die im Saugstutzen 16 stromaufwärts empfangende US-Einheit 3 in der Stutzenwand 7 einliegt, wohingegen die übrigen US-Einheiten 2, 3 von Halteelementen 12 innerhalb des jeweiligen Stutzenkanals 16a, 17a gehalten sind.

Figur 4 zeigt zwei weitere Anordnungen, bei denen die US-Einheiten 2, 3 ebenfalls nicht in einer Wand 7, 8 sondern innerhalb eines Stutzenkanals 16a, 17a liegen. Im Saugstutzen 16 verläuft die Messstrecke 6 im Wesentlichen entlang der Stutzenwand 7. Im Druckstutzen 17 liegt die Messstrecke 6 etwa auf der Mittelachse des Druckstutzens.

Für eine Anordnung entlang der Seitenwand 7, 8 sind, wie in Figuren 3 und 4 gezeigt, stiftartige Haltemittel 13 vorhanden, die an einem Ende teilweise in der Wand 7 einliegen und an ihrem anderen Ende eine Sende-Empfangseinheit 2, 3 tragen.

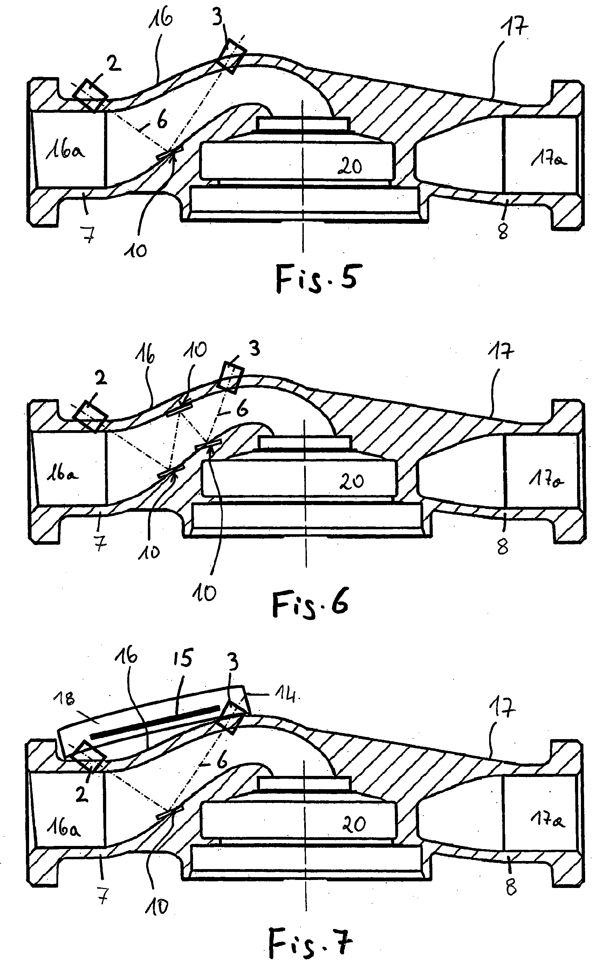

In den Ausführungen nach Figuren 5, 6 und 7 sind zwei US-Kapseln 2, 3 auf derselben Seite in der Seitenwand 7 des Saugstutzens 16 angeordnet, wobei ein oder mehrere Reflektoren 10 die Ultraschallimpulse reflektieren. Die Sende-Empfangseinheiten 2, 3 sind an einer Außenseite von Saug- oder Druckseite 16, 17 der Pumpe angebracht und schauen/ messen in den Volumenstrom hinein, wobei mit einem Ein- und Ausfallwinkel reflexiv gegen eine Fläche gemessen wird.

Die US-Kapseln 2, 3 bilden einmal den Sender und einmal den Empfänger, wobei die Schallwellen auf der Messstrecke 6 in beide Richtungen laufen. Hierbei werden in der Ausführung nach Figur 5 die Schallwellen durch einen Reflektor 10 reflektiert, der an der den US-Kapseln 2, 3 gegenüberliegenden Stutzeninnenwand 7 angeordnet ist. Der Reflektor 10 liegt in Strömungsrichtung zwischen den beiden US-Kapseln. Auch hier ist die Anordnung derart aufeinander ausgerichtet, dass ein ausgesendeter US-Impuls einer der US-Kapseln 2, 3 so reflektiert wird, dass er von der anderen US-Kapsel 3, 2 empfangen wird. Bei diesem reflexiv arbeitenden Verfahren hat die Messstrecke die Form eines V. Die Qualität der Reflektion kann mittels Spiegel, beispielsweise einer glatten auf die Einfall- und Ausfallwinkel optimierte Fläche in der Messstrecke optimiert werden.

Das Ausführungsbeispiel nach Fig. 6 unterscheidet sich von dem nach Fig. 5 dadurch, dass an der Stutzeninnenwand drei Reflektoren 10 angeordnet sind, die die Messstrecke 6 dreimal umlenken. Bei diesem reflexiv arbeitenden Verfahren hat die Messstrecke die Form eines W, so dass Mehrfachreflexion vorliegt, dies eröffnet flexiblere Anordnungsmöglichkeiten für die US-Kapseln 2, 3.

Bei der Ausführung nach Figur 7 ist an der Außenseite des Saugstutzens 16 ein Gehäuse 14 befestigt, das die Sensorelektronik 18 umgibt. Der Einfachheit halber ist hier von der Sensorelektronik 18 nur eine Leiterplatte 15 dargestellt, auf welcher elektrische und elektronische Bauelemente zur Ansteuerung der US-Einheiten und zur Verarbeitung der Messsignale angeordnet sind. Das Gehäuse 14 überdeckt die außen aus der Stutzenwand 7 vorragenden Bereiche der US-Kapseln 2, 3. Die Sensorelektronik 18 der Durchfluss-Messeinrichtung kann sich somit direkt nahe den Ultraschallkapseln 2, 3 befinden. Es ist alternativ auch möglich, dass sich die Sensorelektronik 18 vollständig oder zumindest ein Teil derselben in der Pumpenelektronik befindet. So kann beispielsweise die Ermittlung der Laufzeitdifferenz mittels eines Chips erfolgen, der in dem außen am Saugstutzen 16 angebrachten Gehäuse 14 untergebracht ist. Die Laufzeitdifferenz kann dann über entsprechende Leitungen oder per Funk zur Pumpenelektronik übertragen werden, wo aus der Laufzeitdifferenz und dem Strömungsquerschnitt der Volumenstrom ermittelt werden kann. Insbesondere kann die Pumpenelektronik eine temperaturabhängige Kompensation der Messwerte durchführen. Eine bidirektionale Kommunikation ermöglicht, dass bei bestimmten Betriebszuständen der Pumpe oder der Anlage der Sensor informiert und dann z. B. genullt oder auf bestimmte Werte/Kennlinien kalibriert werden kann.

Das Gehäuse 14 für die Sensorelektronik 18 kann ferner Bestandteil des Gehäuses der Pumpenelektronik sein oder ist an dieses angeflanscht oder eingesteckt sein, so dass es modular verwendet werden kann.

Die Durchfluss-Messeinrichtung und/ oder Pumpe können über einen Langzeitspeicher insbesondere mit einer Uhr, mit einer Stichtagspeicherung, Monatsmengenspeicherung, Jahresmengenspeicherung und/ oder einer Ausgabe der Werte ausgestattet sein. Hierbei kann ein Langzeitakku für die Daten-Langzeitspeicher vorgesehen sein. Die Pumpenelektronik und Durchfluss-Messeinrichtung können vorzugsweise über eine bidirektionale Funkverbindung wie dem Wireless-M-Bus zur Fernabfrage bzw. Auslesung der Zählwerte, der Parameter oder der Konfiguration verfügen. Alternativ kann auch eine feste Verkabelung vorhanden sein, wahlweise mittels LON, KNX, Bacnet, EIB oder LCN. Die Werte für die Laufzeitdifferenz, den Durchfluss und die Volumenstromrichtung können über entsprechende Schnittstellen digital als auch analog ausgegeben werden.

Das Ausführungsbeispiel nach Figur 8a unterscheidet sich von dem nach Fig. 7 dadurch, dass an verschiedenen alternativen Stellen wenigstens ein Temperatursensor 22 angeordnet ist, der die Temperatur des Fördermediums im Saugstutzen 16 ermittelt. Ein Temperatursensor 20 kann in einer mediennahen Bohrung oder Anlegefläche des Pumpengehäuses untergebracht sein. Alternativ kann er, wie in Figur 8b gezeigt, in einer US-Kapsel 2, 3 mediennah untergebracht sein oder an einer US-Kapsel 2, 3 oder am Innenrand des Kapselhalters 4 angebracht sein. Anhand der Temperatur kann eine Kompensation der Messwerte erfolgen, da die Messwerte der US-Kapseln 2, 3 stark temperaturempfindlich sind. Die Temperatursensoren 22 können auch innerhalb der US-Kapseln 2, 3 oder innerhalb des Kapselhalters 4 angeordnet sein. Figur 8b zeigt auch verschiedenen Bauformen von Temperatursensoren 22 (T-Sensoren) die hier Verwendung finden können.

Figuren 9 und 10 zeigen weitere Ausführungsvarianten der erfindungsgemäßen Kreiselpumpe 1, bei der zwei Ultraschalleinheiten innenseitig der Pumpenkammer 20 angeordnet sind. Die Pumpenkammer 20 umfasst einen Spiralraum 20a, in dem das Laufrad 21 einliegt, und einen Seitenraum 20b, der das Laufrad 21 umfänglich umgibt. In Figur 9 sind zwei Sende-Empfangseinheiten 2, 3 in der Pumpenwand 9 der Pumpenkammer 20 integriert, wobei die zwischen ihnen ausgebildete Messstrecke 6 im Seitenraum 20b liegt und parallel zur Achse 5 der Stutzen 16, 17 ausgerichtet ist. In Figur 10 liegt diese Messstrecke dagegen etwa senkrecht zu der Achse 5. Es kann jedoch auch ein beliebiger anderer Winkel vorgesehen sein.

Eine Verschmutzung der Ultraschalleinheiten 2, 3 kann mittels Amplitudenmodulation (verstärkte Signalabstrahlung) kompensiert werden. Dazu wird das jeweilige Empfangssignal von der Sensorelektronik 18 beobachtet und das Sendesignal oder/und das Empfangssignal verstärkt.

Zusätzlich oder alternativ kann eine verschmutzungsunempfindliche Beschichtung, beispielsweise aus Kunststoff wie Teflon oder aus Metall vorgesehen sein.

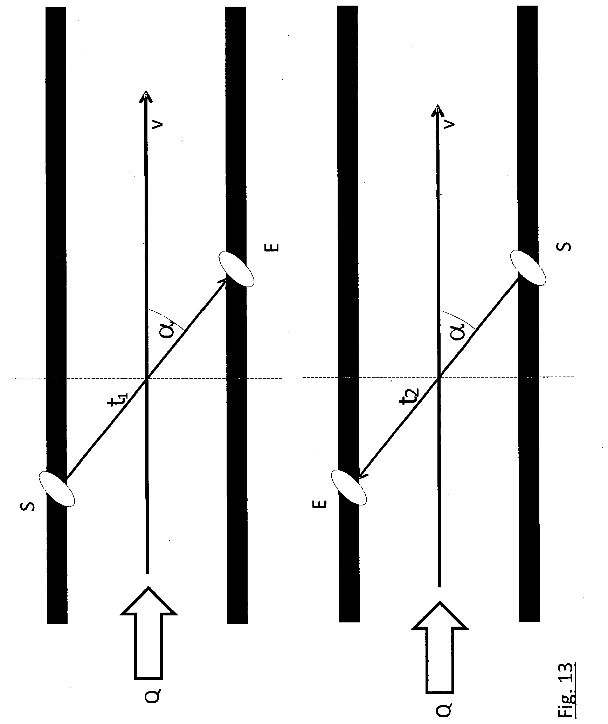

Die erfindungsgemäße ultraschallbasierte Durchfluss-Messeinrichtung arbeitet nach dem Laufzeitprinzip (transit time, time-of-flight). Dies ist an sich bekannt und in Figur 13 kurz skizziert. Dargestellt sind dort zwei Pulsfolgen $t_1$ und $t_2$ zur Bildung der Laufzeitdifferenz $\Delta t$. Dabei bezeichnet S eine sendende Ultraschalleinheit, E eine empfangende Ultraschalleinheit. Für die Zeit $t_1$, die ein Ultraschallimpuls bei einer Ausbreitungsgeschwindigkeit $c_0$ (Schallgeschwindigkeit) in der Flüssigkeit benötigt, um in Strömungsrichtung den Empfänger E zu erreichen, gilt $t_1 = d / (c_0 + v * \cos \alpha)$. Für die Zeit $t_2$, die ein Ultraschallimpuls bei einer Ausbreitungsgeschwindigkeit $c_0$ in der Flüssigkeit benötigt, um entgegen der Strömungsrichtung den Empfänger E zu erreichen, gilt $t_1 = d / (c_0 - v * \cos \alpha)$. Hier ist d der Abstand zwischen Sender- und Empfängereinheit. v ist die gemittelte Strömungsgeschwindigkeit. Bei einer Messstrecke, die parallel zur Strömungsrichtung liegt, d.h. wenn kein Winkel ($\alpha = 0$) vorhanden ist, ergibt sich die Gleichung zu $t_1 = d / (c_0 + v)$ bzw. $t_2 = d / (c_0 - v)$.

Die Laufzeitdifferenz $\Delta t$ ergibt sich rechnerisch zu

$$\Delta t = 2 * d * v * \cos \alpha / (c_0^2 - v^2 * \cos^2 \alpha) \cong 2 * d * \cos \alpha * v / c_0^2 \quad (1).$$

Daraus ergibt sich für die Strömungsgeschwindigkeit

$$v = \Delta t * c_0^2 / 2 * d \cos \alpha \quad (2).$$

Liegt kein Winkel vor ($\alpha = 0$), ist die Laufzeitdifferenz: $\Delta t = t_2 - t_1$ (3). Die resultierende Strömungsgeschwindigkeit ist dann $v = d*(t_2 - t_1) / (2 t_1 * t_2)$ (4).

Der Durchfluss Q errechnet sich dann aus den Gleichungen (1) und (2) bzw. (3) und (4) nach

$$Q = A * v,$$

wobei A die Querschnittsfläche der Meßstrecke ist. In der Praxis wird aus mehreren zeitlich einander zugeordneten Laufzeitmessungen der Wert der Strömungsgeschwindigkeit v der Flüssigkeit als Mittelwert ermittelt. Aufgrund ungleichmäßig geformter Querschnitte A der Meßstrecke kann die Volumenstrom/Durchflussmenge nicht numerisch berechnet, sondern über eine Referenzmesseinrichtung kalibriert werden.

Mittels der erfindungsgemäßen Ultraschall-Durchfluss-Messeinrichtung kann auch eine Analyse des Mediums insbesondere nach Medienart, Medienzusammensetzung, z. B. bezüglich der Wasser-Glykol-Anteile, und Medienqualität, z. B. hinsichtlich Verschmutzung, Alterung, Eindringen fremden Mediums, sowie auch eine Diagnose der Pumpe oder der Pumpenanlage anhand der Laufzeitmessung und der Temperaturmessung erfolgen.

Es kann ferner aufgrund der bidirektionalen Messmöglichkeit ein Rückfluss erkannt werden, der z. B. bei einem defekten Rückflussverhinderer in der Anlage oder bei Überströmung durch andere Pumpen in einem System, beispielsweise bei einem Heizungssystem mit dezentralen Pumpen an den Verbrauchern, entstehen kann. Ferner ist es aufgrund der Empfangssignalqualität auch möglich, Luft oder Luftblasen zu erkennen. Weiterhin ist der Frostschutzmittelanteil (z. B. Glykole) qualitativ detektierbar. Hierzu kann die Ultraschall-Durchfluss-Messeinrichtung mit der übergeordneten Pumpenelektronik oder einer zentralen Pumpensteuerung kommunizieren. Denkbar ist neben der Ausgabe des Proportionalsignals (analog oder digital) auch ein Schaltsignal als Alarmausgabe, bei z. B. Überschreiten einer Durchflussmenge in falscher Richtung.

Es ist des Weiteren von Vorteil, wenn die Pumpe eine Anzeige aufweist, auf der der aktuelle Volumenstrom, Durchflussrichtung, Zählerstände (Jahres-,Monats-, Stichtagsmenge, Einheiten in l/h, m³/h, l/min, m³/min), sowie Temperaturmesswerte und Wärmemengenmesswerte sowie Fehler der Messeinrichtung angezeigt werden können.

Der Sensor bietet des Weiteren über seine Elektronik die Möglichkeit, eine Funktion Datenlogger / Recorder für Messdaten zu realisieren. So können beispielsweise Volumenstrom und Temperatur des Mediums, vorzugsweise auch erreichte Spitzenwerte (Minima und Maxima), also z.B. minimaler Durchfluss, maximaler Durchfluss, und/ oder minimale und maximale Temperatur) in einer Historie abgespeichert werden. Auch können weitere Angaben wie Flussrichtung; Betriebsstunden, Fehler/Betriebsstörungen und Diagnosewerte des Mediums über die Zeit abgespeichert und aus dem Speicher wieder ausgelesen werden.

Die erfindungsgemäße Durchfluss-Messeinrichtung bietet eine messtechnisch optimierte Sensormessstrecke, bei der glatte Wandungsverläufe realisiert werden können. Abrisskanten und Nischen, die zu einer Verschmutzungsansammlung führen, können vermieden werden. Soweit Ausnehmungen, Bohrungen oder Sacklöcher vorhanden sind, in die die Ultraschallkapseln 2, 3 derart eingesetzt sind, dass die Membran 11 oder Platte gegenüber der Innenseite der Wand unter Ausbildung einer Nische zurückversetzt ist, kann diese Nische beispielsweise durch ein Polymerharz idealerweise vollständig ausgefüllt werden, um einen glatten Wandungsverlauf an der Innenseite der Wand 7, 8, 9 zu erreichen.

Aufgrund des integrierenden Messprinzips generiert die Durchfluss-Messeinrichtung schon ohne große Strömungskonditionierungsmaßnahmen optimale Messergebnisse. Zur Verbesserung der Messsignalqualität bzw. des Messergebnisses kann jedoch eine Strömungskonditionierung in der Zuströmung und/ oder Abströmung zumindest einer der Ultraschalleinheiten erfolgen. So können beispielsweise Strömungskonditionisierungselemente, insbesondere Mittel zur Laminarisierung der Strömung, wie beispielsweise Gitter, Lamellen, Schwerter, Rippen, Finnen, etc. im Strömungsweg angeordnet sein. So können beispielsweise saugseitig oder druckseitig Strömungskonditionierungselemente angeordnet sein. Alternativ oder in Kombination können solche Elemente in Zu- und/ oder Abströmungsbereichen nahe dem Laufrad 22 angeordnet sein.

Eine weitere Art der Strömungkonditionierung kann durch eine Querschnittsminimierung des Zuströmkanals erfolgen, wodurch eine Beschleunigung der Strömung im Zulauf der Ultraschalleinheit bewirkt wird. Insbesondere kann im Zulaufkanals eine spezielle Querschnittsformgebung vorhanden sein. So kann der Stutzenkanal 16a im Saugstutzen 16 oder der Stutzenkanal 17a im Druckstutzen 17 beispielsweise oval oder elliptisch sein.

Alternativ oder zusätzlich kann eine Strömungskonditionierung durch die Einarbeitung von Hutzen in die Strömungsstrecke vor oder hinter den US-Einheiten 2, 3, um Strömungsabrisse und Schmutzablagerungen zu minimieren.

Vorteilhaft ist es, wenn die Pumpenhydraulik derart ausgelegt ist, dass die Rückwirkung auf eine Messstrecke minimiert wird, beispielsweise durch die Verwendung radialer Laufräder oder durch eine Verwendung eines möglichst kleinen Radseitenraums 20b. Auch reduziert eine kantenfreie Zuströmung zum Laufrad die Rückwirkung auf die Messstrecke.

Eine Durchfluss-Messeinrichtung, die nach dem Ultraschall-Laufzeitprinzip arbeitet, kann mit einem Qmax/Qmin-Verhältnis von ca. 200:1 und höher (bis zu 500:1) aufwarten, u.a. dadurch bedingt, dass der untere minimal erfassbare Strömungsgeschwindigkeitsbereich bei 0,02 m/sec. liegen kann. Damit kann die Durchfluss-Messeinrichtung einen wesentlich größeren Volumenstrombereich innerhalb definierter Messunsicherheit (-genauigkeit) erfassen. Vor allem wird der Messbereich "nach unten" erweitert. Dies ermöglicht wiederum eine Nullmengendetektion und damit die Erfassung einer definierten kleinen Durchflussmenge einer Pumpe oder Anlage. Der Begriff Nullmenge wird hierbei durch die Applikation definiert und wertemäßig fixiert und nicht durch den Sensor.

Die zu erwartenden Druckverluste fallen konstruktionsbedingt kleiner aus als bei den herkömmlichen Sensorprinzipien, da die für das Ultraschall-Laufzeitprinzip notwendigen Sender- und Empfängerkomponenten außerhalb der Strömungsstrecken untergebracht werden können oder zumindest nicht wesentlich flächendeckend (Querschnitt Strömungskanal betreffend) in diese hineinragen. Demgegenüber können bei der erfindungsgemäßen Variante technisch verträgliche Ausnahmen realisiert werden, siehe beispielsweise die koaxial Anordnung der US-Einheiten in Figuren 3 und 4.

Das Ultraschallprinzip verhält sich verschmutzungsunempfindlicher. Eine entsprechende Gestaltung der Sensorkomponenten-Oberflächen und die schmutzverhindernde Gestaltung des Strömungsweges unterstützt diese Eigenschaft noch.

Ein weiterer Vorteil ist, dass die Pumpe 1 mit Durchfluss-Messeinrichtung ein Komplettbauteil darstellt, welches keine weitere separate Volumenstromsensorik oder Temperatursensorik für die Medientemperatur benötigt. Dieses Komplettbauteil "Pumpe + Sensorik" kann daher wie eine einzige Komponente betrachtet werden, die ihr Medium erfasst, ihren Arbeitspunkt direkt selbst bestimmen kann und daher kontrolliert bzw. geregelt fördern kann, z. B. auf konstanten Volumenstrom oder auch auf Wärmemenge, und die die dazu erforderlichen Parameter Volumenstrom und Medientemperatur und ggf. Medienzusammensetzung selbst messen kann. Dieses Komplettbauteil beansprucht aufgrund der integrierten Sensorik daher keinen weiteren Platzbedarf in einer Anlage. Was zudem Kosten, verursacht durch weitere Anschlüsse (hydraulisch, elektrisch) und Dichtungen, einspart.

Weitere Merkmale und Vorteile der Erfindung seien nachfolgend stichpunktartig zusammengefasst.

- Die Durchfluss-Messeinrichtung ist als Wasserzähler, Wärmerechner, Wärmezähler, Kälterechner, Klimarechner, Volumenstrommengen pro Zeit (Dosierung) einsetzbar;
- Die Durchfluss-Messeinrichtung ist verschmutzungsunempfindlicher als die bekannten o.g. Sensorprinzipien;
- Die Durchfluss-Messeinrichtung ist leise im Betrieb, da keine beweglichen Teile vorhanden sind;
- Die Anlaufwerte sind günstiger als bei Laufrad, Turbine oder Vortex-Sensoren;
- Die Durchfluss-Messeinrichtung schränkt die Einbaulage der Pumpe 1 nicht ein;
- Da keine beweglichen Teile existieren, ist dieser Sensor verschleißärmer und geräuschärmer als eine Turbine oder ein Laufrad.
- Einfache Inbetriebnahme aufgrund des geringeren Installationsaufwands für Hydraulik und Elektrik (ggü. separaten Komponenten).
- Die Pumpe mit Sensor ist messtechnisch skalierbar, d. h. der Sensor kann sich zum einen der Pumpe anpassen oder auch spezielle Messbereiche nach Bedarf besonders fokussieren oder hervorheben.

Ausführungsbeispiele

Die erfindungsgemäße Pumpe kann eine Solarpumpe sein, in der die Durchfluss-Messeinrichtung z. B. zur Wärmemengenerfassung (Ertragserfassung) integriert ist. Allgemein ist die Integration der erfindungsgemäßen Pumpe in einer Solaranlage zur Funktionskontrolle möglich. Alternativ kann die Pumpe eine Frischwasserstationspumpe, eine Heizungspumpe oder eine Dosierpumpe sein. Als Heizungspumpe kann die Durchfluss-Messeinrichtung ebenfalls der Wärmemengenzählung dienen. Schließlich kann die Durchfluss-Messeinheit auch zur Leistungsmessung oder Leistungsregelung von Pumpen oder Pumpenanlagen dienen. Die Pumpe 1 kann ein Nass- oder Trockenläufer sein.

**Patentansprüche**

1. Kreiselpumpe (1) zur Förderung einer Flüssigkeit, mit einem in einer Pumpenkammer (20) angeordneten Laufrad (21) und jeweils einem an der Pumpenkammer (20) angeschlossenen Saugstutzen (16) und Druckstutzen (17), **gekennzeichnet durch** eine ultraschallbasierte Durchfluss-Messeinrichtung (2, 3, 18) umfassend wenigstens zwei Ultraschalleinheiten (2, 3) zur Aussendung und/ oder Detektion von Ultraschallimpulsen, die innenseitig im oder am Saugstutzen (16), Druckstutzen (17) und/ oder der Pumpenkammer (20) angeordnet sind, wobei zwischen den Ultraschalleinheiten (2, 3) mindestens eine Messstrecke (6) gebildet ist, entlang welcher wenigstens ein erster, von einer der Ultraschalleinheiten (2) stromaufwärts aussendbarer Ultraschallimpuls von einer anderen der Ultraschalleinheiten (3) detektierbar ist und wenigstens ein zweiter, von einer der Ultraschalleinheiten (3) stromabwärts aussendbarer Ultraschallimpuls von einer anderen der Ultraschalleinheiten (2) detektierbar ist, wobei die Durchfluss-Messeinrichtung (2, 3, 18) eine Sensorelektronik (18) zur Ermittlung einer Laufzeitdifferenz zwischen dem ersten und dem zweiten Ultraschallimpuls und zur Bestimmung eines Durchflusses der Kreiselpumpe (1) aus der Laufzeitdifferenz aufweist.

2. Kreiselpumpe (1) nach Anspruch 1, **dadurch gekennzeichnet, dass** die Ultraschalleinheiten (2, 3) kombinierte Sende-Empfangseinheiten (2, 3) sind, wobei der wenigstens eine erste Ultraschallimpuls von einer ersten Sende-Empfangseinheit (2) aussendbar und von einer zweiten Sende-Empfangseinheit (3) detektierbar ist und der wenigstens eine zweite Ultraschallimpuls von der zweiten Sende-Empfangseinheit (3) aussendbar und von der ersten Sende-Empfangseinheit (2) detektierbar ist.

3. Kreiselpumpe (1) nach Anspruch 2, **dadurch gekennzeichnet, dass** die Durchfluss-Messeinrichtung (2, 3, 18) eine dritte und eine vierte Sende-Empfangseinheit (2, 3) zur Aussendung und Detektion von Ultraschallimpulsen umfasst, wobei zwischen der dritten und vierten Sende-Empfangseinheit (2, 3) eine zweite Messstrecke (6) gebildet ist, entlang welcher wenigstens ein erster, von der dritten Sende-Empfangseinheit (2) stromaufwärts aussendbarer Ultraschallimpuls von der vierten Sende-Empfangseinheit (3) detektierbar ist und wenigstens ein zweiter, von der vierten Sende-Empfangseinheit (3) stromabwärts aussendbarer Ultraschallimpuls von der dritten Sende-Empfangseinheit (2) detektierbar ist.

4. Kreiselpumpe (1) nach Anspruch 1, **dadurch gekennzeichnet, dass** die Durchfluss-Messeinrichtung (2, 3, 18) zwei weitere Ultraschalleinheiten (2, 3) zur Aussendung und/ oder Detektion von Ultraschallimpulsen umfasst, wobei zwischen den zwei weiteren Ultraschalleinheiten (2, 3) eine zweite Messstrecke (6) gebildet ist, und wenigstens ein erster, von einer ersten Ultraschalleinheit (2) entlang der ersten Messstrecke (6) stromaufwärts aussendbarer Ultraschallimpuls von einer zweiten Ultraschalleinheit (3) detektierbar ist und wenigstens ein zweiter, von einer dritten Ultraschalleinheit (2) entlang der zweiten Messstrecke (6) stromabwärts aussendbarer Ultraschallimpuls von einer vierten Ultraschalleinheit (2) detektierbar ist.

5. Kreiselpumpe (1) nach Anspruch 3 oder 4, **dadurch gekennzeichnet, dass** sich die erste und die zweite Messstrecke (6) kreuzen.

6. Kreiselpumpe (1) nach einem der vorherigen Ansprüche, **dadurch gekennzeichnet, dass** die Ultraschalleinheiten (2, 3) in eine Wand (7, 8, 9) des Saugstutzens (16), des Druckstutzens (17) und/ oder der Pumpenkammer (20) integriert sind, insbesondere in taschenförmigen Ausnehmungen in der Wand (7, 8, 9) einliegen.

7. Kreiselpumpe (1) nach einem der vorherigen Ansprüche, **dadurch gekennzeichnet, dass** eine der Ultraschalleinheiten (2, 3) einer Messstrecke (6) in einer Wand (7, 8, 9) des Saugstutzens (16), des Druckstutzens (17) oder der Pumpenkammer (20) integriert ist und die andere Ultraschalleinheit (2, 3) dieser Messstrecke im Kanal (16,a, 17a) des Saugstutzens (16), des Druckstutzens (17) oder im Innenraum (20b) der Pumpenkammer (20) angeordnet ist.

8. Kreiselpumpe (1) nach einem der vorherigen Ansprüche, **dadurch gekennzeichnet, dass** innerhalb der ersten und/ oder zweiten Messstrecke (6) zumindest ein Reflektor (10) angeordnet ist.

9. Kreiselpumpe (1) nach einem der vorherigen Ansprüche, **dadurch gekennzeichnet, dass** die Durchfluss-Messeinrichtung (2, 3, 18) derart eingerichtet ist, dass von der einen und/ oder der anderen Ultraschalleinheit (2, 3) eine Reihe aufeinanderfolgender Ultraschallimpulse aussendbar ist.

10. Kreiselpumpe (1) nach einem der vorherigen Ansprüche, **dadurch gekennzeichnet, dass** die Ultraschalleinheiten (2, 3) durch Kapseln (13) gebildet sind, in denen der sensorisch oder aktorisch aktive Teil (19) einer Ultraschalleinheit (2, 3), umschlossen ist.

11. Kreiselpumpe (1) nach Anspruch 10, **dadurch gekennzeichnet, dass** die Kapseln (2, 3) von einer schalldurchlässigen Membran (11) oder Platte (11) verschlossen sind, an der der sensorisch oder aktorisch aktive Teil (19) einer Ultraschalleinheit (2, 3) anliegt.

12. Kreiselpumpe (1) nach einem der vorherigen Ansprüche, **dadurch gekennzeichnet, dass** zumindest ein Teil der Sensorelektronik (18) in einem Gehäuse (14) an einer Außenseite des Saugstutzens (16) oder Druckstutzens (17) untergebracht ist, und/ oder dass die Sensorelektronik (18) Teil einer Pumpenelektronik der Kreiselpumpe (1) ist.

13. Kreiselpumpe (1) nach einem der vorherigen Ansprüche, **dadurch gekennzeichnet, dass** der Kanal (16a, 17a) innerhalb des Saugstutzens (16) und/ oder Druckstutzens (17) wenigstens ein Leitelement zur Strömungskonditionierung aufweist, insbesondere wenigstens ein Gitter, eine Lamelle, ein Schwert, eine Rippe und/oder eine Finne.

14. Kreiselpumpe (1) nach einem der vorherigen Ansprüche, **dadurch gekennzeichnet, dass** der Kanal (16a, 17a) innerhalb des Saugstutzens (16) und/ oder Druckstutzens (17) eine Verengung zur Beschleunigung der Strömung aufweist.

15. Kreiselpumpe (1) nach einem der vorherigen Ansprüche, **dadurch gekennzeichnet, dass** der Kanal (16a, 17a) innerhalb des Saugstutzens (16) und/ oder Druckstutzens (17) vor und/oder hinter den Ultraschalleinheiten (2, 3) wenigstens eine Hutze zur Minimierung von Strömungsabrissen und von Schmutzablagerungen aufweist.

16. Kreiselpumpe (1) nach einem der vorherigen Ansprüche, **dadurch gekennzeichnet, dass** die Pumpenkammer (20) eine Spiralkammer (20a) und einen das Laufrad (21) umgebenden Seitenraum (20b) umfasst, und dass sich die Messstrecke (6) oder die zweite Messstrecke (6) in dem Seitenraum (20b) erstreckt.

17. Kreiselpumpe (1) nach einem der vorherigen Ansprüche, **dadurch gekennzeichnet, dass** diese eine Heizungspumpe für eine Heizungs- oder Kühlanlage oder eine Kreiselpumpe (1) für eine Solaranlage oder Frischwasseranlage ist.

**Claims**

1. Centrifugal pump (1) for delivering a liquid, comprising an impeller (21) arranged in a pump chamber (20) and respectively one suction connection (16) and pressure connection (17) connected to the pump chamber (20), **characterized by** an ultrasound-based flow measuring device (2, 3, 18) comprising at least two ultrasonic units (2, 3) for the transmission and/or detection of ultrasonic pulses, which are arranged on the inside in or on the suction connection (16), the pressure connection (17) and/or the pump chamber (20), wherein at least one measuring section (6) is formed between the ultrasonic units (2, 3), along which section at least one first ultrasonic pulse that can be transmitted upstream by one of the ultrasonic units (2) can be detected by another of the ultrasonic units (3), and at least one second ultrasonic pulse that can be transmitted downstream by one of the ultrasonic units (3) can be detected by another of the ultrasonic units (2), wherein the flow measuring device (2, 3, 18) has sensor electronics (18) for determining a propagation time difference between the first and the second ultrasonic pulse and for determining a flow of the centrifugal pump (1) from the propagation time difference.

2. Centrifugal pump (1) according to Claim 1, **characterized in that** the ultrasonic units (2, 3) are combined transmitting/receiving units (2, 3), wherein the at least one first ultrasonic pulse can be transmitted by a first transmitting/receiving unit (2) and detected by a second transmitting/receiving unit (3), and the at least one second ultrasonic pulse can be transmitted by the second transmitting/receiving unit (3) and detected by the first transmitting/receiving unit (2).

3. Centrifugal pump (1) according to Claim 2, **characterized in that** the flow measuring device (2, 3, 18) comprises a third and fourth transmitting/receiving unit (2, 3) for the transmission and detection of ultrasonic pulses, wherein a second measuring section (6) is formed between the third and fourth transmitting/receiving units (2, 3), along which section at least one first ultrasonic pulse that can be transmitted upstream by the third transmitting/receiving unit (2) can be detected by the fourth transmitting/receiving unit (3), and at least one second ultrasonic pulse that can be transmitted downstream by the fourth transmitting/receiving unit (3) can be detected by the third transmitting/receiving unit (2).

4. Centrifugal pump (1) according to Claim 1, **characterized in that** the flow measuring device (2, 3, 18) comprises two further ultrasonic units (2, 3) for the transmission and/or detection of ultrasonic pulses, wherein a second measuring section (6) is formed between the two further ultrasonic units (2, 3) and at least one first ultrasonic pulse that can be transmitted upstream along the first measuring section (6) by a first ultrasonic unit (2) can be detected by a second ultrasonic unit (3), and at least one second ultrasonic pulse that can be transmitted downstream along the second measuring section (6) by a third ultrasonic unit (2) can be detected by a fourth ultrasonic unit (2).

5. Centrifugal pump (1) according to Claim 3 or 4, **characterized in that** the first and the second measuring sections (6) cross each other.

6. Centrifugal pump (1) according to one of the preceding claims, **characterized in that** the ultrasonic units (2, 3) are integrated into a wall (7, 8, 9) of the suction connection (16), the pressure connection (17) and/or the pump chamber (20), in particular inset in pocket-like recesses in the wall (7, 8, 9).

7. Centrifugal pump (1) according to one of the preceding claims, **characterized in that** one of the ultrasonic units (2, 3) of a measuring section (6) is integrated in a wall (7, 8, 9) of the suction connection (16), the pressure connection (17) or the pump chamber (20), and the other ultrasonic unit (2, 3) of this measuring section is arranged in the channel (16a, 17a) of the suction connection (16), the pressure connection (17) or in the interior (20b) of the pump chamber (20).

8. Centrifugal pump (1) according to one of the preceding claims, **characterized in that** at least one reflector (10) is arranged within the first and/or second measuring section (6).

9. Centrifugal pump (1) according to one of the preceding claims, **characterized in that** the flow measuring device (2, 3, 18) is designed in such a way that a series of successive ultrasonic pulses can be transmitted by one and/or the other ultrasonic unit (2, 3).

10. Centrifugal pump (1) according to one of the preceding claims, **characterized in that** the ultrasonic units (2, 3) are formed by capsules (13), in which the active sensory or actuating part (19) of an ultrasonic unit (2, 3) is enclosed.

11. Centrifugal pump (1) according to Claim 10, **characterized in that** the capsules (2, 3) are closed by an ultrasound-permeable membrane (11) or plate (11), on which the active sensory or actuating part (19) of an ultrasonic unit (2, 3) rests.

12. Centrifugal pump (1) according to one of the preceding claims, **characterized in that** at least a part of the sensory electronics (18) is accommodated in a housing (14) on an outer side of the suction connection (16) or pressure connection (17), and/or **in that** the sensor electronics (18) are part of the pump electronics of the centrifugal pump (1).

13. Centrifugal pump (1) according to one of the preceding claims, **characterized in that** the channel (16a, 17a) within the suction connection (16) and/or pressure connection (17) has at least one guide element for flow conditioning, in particular at least one grid, a slat, a blade, a rib and/or a fin.

14. Centrifugal pump (1) according to one of the preceding claims, **characterized in that** the channel (16a, 17a) within the suction connection (16) and/or pressure connection (17) has a narrowing for accelerating the flow.

15. Centrifugal pump (1) according to one of the preceding claims, **characterized in that** the channel (16a, 17a) within the suction connection (16) and/or pressure connection (17) upstream and/or downstream of the ultrasonic units (2, 3) has at least one hood for minimizing flow separations and deposits of dirt.

16. Centrifugal pump (1) according to one of the preceding claims, **characterized in that** the pump chamber (20) comprises a spiral chamber (20a) and a side chamber (20b) surrounding the impeller (21), and **in that** the measuring section (6) or the second measuring section (6) extends into the side chamber (20b).

17. Centrifugal pump (1) according to one of the preceding claims, **characterized in that** this is a heating pump for a heating or cooling system or centrifugal pump (1) for a solar system or freshwater system.

**Revendications**

1. Pompe centrifuge (1) destinée à transporter un liquide, avec une roue (21) disposée dans une chambre de pompe (20) et avec une tubulure d'aspiration (16) et une tubulure de refoulement (17) respectivement raccordées à la chambre de pompe (20), **caractérisée par** un dispositif de mesure de débit (2, 3, 18) à base d'ultrasons comprenant au moins deux unités à ultrasons (2, 3), destinées à l'émission et/ou à la détection d'impulsions ultrasonores, qui sont disposées côté intérieur dans ou sur la deuxième tubulure d'aspiration (16), la tubulure de refoulement (17) et/ou la chambre de pompe (20), au moins un tronçon de mesure (6) étant formé entre les unités à ultrasons (2, 3), le long duquel au moins une première impulsion ultrasonore pouvant être émise vers l'amont par une des unités à ultrasons (2) est détectable par une autre des unités à ultrasons (3), et au moins une deuxième impulsion ultrasonore pouvant être émise vers l'aval par une des unités à ultrasons (3) est détectable par une autre des unités à ultrasons (2), le dispositif de mesure de débit (2, 3, 18) présentant une électronique de capteur (18) destinée à la détermination d'une différence de temps de propagation entre la première et la deuxième impulsion ultrasonore et à la définition d'un débit de la pompe centrifuge (1) à partir de la différence de temps de propagation.

2. Pompe centrifuge (1) selon la revendication 1, **caractérisée en ce que** les unités à ultrasons (2, 3) sont des unités d'émission/réception (2, 3) combinées, la première impulsion ultrasonore au moins au nombre de un pouvant être émise par une première unité d'émission/réception (2) et étant détectable par une deuxième unité d'émission/réception (3), et la deuxième impulsion ultrasonore au moins au nombre de un pouvant être émise par la deuxième unité d'émission/réception (3) et étant détectable par la première unité d'émission/réception (2).

3. Pompe centrifuge (1) selon la revendication 2, **caractérisée en ce que** le dispositif de mesure de débit (2, 3, 18) comprend une troisième et une quatrième unité d'émission/réception (2, 3) destinée à l'émission et à la détection d'impulsions ultrasonores, un deuxième tronçon de mesure (6) étant formé entre la troisième et quatrième unité d'émission/réception (2, 3), le long duquel au moins une première impulsion ultrasonore pouvant être émise vers l'amont par la troisième unité d'émission/réception (2) est détectable par la quatrième unité d'émission/réception (3), et au moins une deuxième impulsion ultrasonore pouvant être émise vers l'aval par la quatrième unité d'émission/réception (3) est détectable par la troisième unité d'émission/réception (2).

4. Pompe centrifuge (1) selon la revendication 1, **caractérisée en ce que** le dispositif de mesure de débit (2, 3, 18) comprend deux autres unités à ultrasons (2, 3) destinées à l'émission et/ou à la détection d'impulsions ultrasonores, un deuxième tronçon de mesure (6) étant formé entre les deux autres unités à ultrasons (2, 3), et au moins une première impulsion ultrasonore pouvant être émise vers l'amont par une première unité à ultrasons (2) le long du premier tronçon de mesure (6) étant détectable par une deuxième unité à ultrasons (3), et au moins une deuxième impulsion ultrasonore pouvant être émise vers l'aval par une troisième unité à ultrasons (2) le long du deuxième tronçon de mesure (6) étant détectable par une quatrième unité à ultrasons (2).

5. Pompe centrifuge (1) selon la revendication 3 ou 4, **caractérisée en ce que** le premier et le deuxième tronçon de mesure (6) se croisent.

6. Pompe centrifuge (1) selon l'une des revendications précédentes, **caractérisée en ce que** les unités à ultrasons (2, 3) sont intégrées dans une paroi (7, 8, 9) de la tubulure d'aspiration (16), de la tubulure de refoulement (17) et/ou de la chambre de pompe (20), en particulier sont logées dans des creux en forme de poche dans la paroi (7, 8, 9).

7. Pompe centrifuge (1) selon l'une des revendications précédentes, **caractérisée en ce que** l'une des unités à ultrasons (2, 3) d'un tronçon de mesure (6) est intégrée dans une paroi (7, 8, 9) de la tubulure d'aspiration (16), de la tubulure de refoulement (17) et/ou de la chambre de pompe (20), et l'autre unité à ultrasons (2, 3) de ce tronçon de mesure est disposée dans le canal (16a, 17a) de la tubulure d'aspiration (16), de la tubulure de refoulement (17) ou dans l'espace intérieur (20b) de la chambre de pompe (20).

8. Pompe centrifuge (1) selon l'une des revendications précédentes, **caractérisée en ce qu'**au moins un réflecteur (10) est disposé à l'intérieur du premier et/ou du deuxième tronçon de mesure (6).

9. Pompe centrifuge (1) selon l'une des revendications précédentes, **caractérisée en ce que** le dispositif de mesure de débit (2, 3, 18) est agencé de telle sorte qu'une série d'impulsions ultrasonores successives peut être émise par l'une et/ou par l'autre unité à ultrasons (2, 3).

10. Pompe centrifuge (1) selon l'une des revendications précédentes, **caractérisée en ce que** les unités à ultrasons (2, 3) sont formées par des capsules (13) dans lesquelles est enserrée la partie (19) active au plan de la détection ou de l'actionnement d'une unité à ultrasons (2, 3).

11. Pompe centrifuge (1) selon la revendication 10, **caractérisée en ce que** les capsules (2, 3) sont enfermées par une membrane (11) ou plaque (11), perméable aux sons, à laquelle la partie (19) active au plan de la détection ou de l'actionnement d'une unité à ultrasons (2, 3) est adjacente.

12. Pompe centrifuge (1) selon l'une des revendications précédentes, **caractérisée en ce qu'**au moins une partie de l'électronique de capteur (18) est installée dans un boîtier (14) sur un côté extérieur de la tubulure d'aspiration (16) ou de la tubulure de refoulement (17), et/ou **en ce que** l'électronique de capteur (18) fait partie d'une électronique de pompe de la pompe centrifuge (1).

13. Pompe centrifuge (1) selon l'une des revendications précédentes, **caractérisée en ce que** le canal (16a, 17a) présente à l'intérieur de la tubulure d'aspiration (16) et/ou de la tubulure de refoulement (17), au moins un élément de guidage destiné au traitement de l'écoulement, en particulier au moins une grille, une lamelle, une lame, une ailette et/ou un aileron.

14. Pompe centrifuge (1) selon l'une des revendications précédentes, **caractérisée en ce que**, à l'intérieur de la tubulure d'aspiration (16) et/ou de la tubulure de refoulement (17), le canal (16a, 17a) présente un rétrécissement destiné à accélérer l'écoulement.

15. Pompe centrifuge (1) selon l'une des revendications précédentes, **caractérisée en ce que**, à l'intérieur de la tubulure d'aspiration (16) et/ou de la tubulure de refoulement (17), devant et/ou derrière les unités à ultrasons (2, 3), le canal (16a, 17a) présente au moins un capot destiné à minimiser des décollements d'écoulement et des dépôts d'impuretés.

16. Pompe centrifuge (1) selon l'une des revendications précédentes, **caractérisée en ce que** la chambre de pompe (20) comprend une chambre spirale (20a) et un espace latéral (20b) entourant la roue (21), et **en ce que** le tronçon de mesure (6) ou le deuxième tronçon de mesure (6) s'étend dans l'espace latéral (20b).

17. Pompe centrifuge (1) selon l'une des revendications précédentes, **caractérisée en ce que** celle-ci est une pompe de chauffage pour une installation de chauffage ou de refroidissement, ou une pompe centrifuge (1) pour une installation solaire ou une installation d'eau fraîche.

Fig. 1

Fis. 2

Fis. 3

Fig. 4

Fis. 5

Fis. 6

Fis. 7

Fig. 8a

Fig. 8b

Bauformen T-Sensoren

= Schema
für Sensor

Fig. 8c

Fig. 9

Fig. 10

EP 2 872 781 B1

Fig. 12

Fig. 11

Fig. 13

EP 2 872 781 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012210518 A1